# EUROPÄISCHE PATENTANMELDUNG

(11) **EP 3 114 974 A1**
(43) Veröffentlichungstag der Anmeldung: **11.01.2017**
(21) Anmeldenummer: 16178626.4
(22) Anmeldetag: 08.07.2016
(51) Int. Cl.: A47J 37/07, A21B 1/33, A21B 1/52, F24B 1/22, F24B 5/08, F24C 15/32

(54) **GARVORRICHTUNG**

(30) Priorität: 08.07.2015 AT 4432015
(71) Anmelder: Schneeberger, Matthias, 1220 Wien (AT); Kettl, Markus, 2211 Pillichsdorf (AT)
(72) Erfinder: Schneeberger, Matthias, 1220 Wien (AT); Kettl, Markus, 2211 Pillichsdorf (AT)
(74) Vertreter: Ellmeyer, Wolfgang

(57) **Zusammenfassung**

Garvorrichtung mit einem Heizraum (71)und einem oberhalb des Heizraumes (71) angeordneten Garraum (70), wobei der Garraum (70) eine Bodenplatte (20)aufweist, durch welche der Garraum (70) vom Heizraum (71) getrennt ist, wobei im Randbereich der Bodenplatte (20) eine oder mehrere Durchtrittsöffnungen (80, 81) vorgesehen sind, durch welche Rauchgas aus dem Heizraum (71) in den Garraum (70) leitbar ist, und wobei im oberen Bereich des Garraumes (70) eine Rauchabzugsöffnung (90) vorgesehen ist, durch die das Rauchgas aus dem Garraum (70) zumindest teilweise austritt, wobei der Garraum (70) im oberen Bereich eine Wärmeisolierungsschicht (91) aufweist, wobei der Garraum (70) an einer Seite eine Einschuböffnung (60) zum Einbringen und Entnehmen von Gargut aufweist, die Rauchabzugsöffnung (90) nahe der Einschuböffnung (60) angeordnet ist, und an der Einschuböffnung (60) im oberen Bereich eine Staublende (62) mit einer Staukante (61) vorgesehen ist, welche Staukante (61) gegenüber der Oberkante der Einschuböffnung (60) bzw. des Garraumes (70) in einem Abstand nach unten versetzt angeordnet ist und die eine Aufstauung des Rauchgases bewirkt, um ein Entweichen desselben über die Einschuböffnung (60) zu behindern.

## Beschreibung

Die Erfindung betrifft eine Garvorrichtung mit einem Heizraum und einem oberhalb des Heizraumes angeordneten Garraum, wobei der Garraum eine Bodenplatte aufweist, durch welche der Garraum vom Heizraum getrennt ist, wobei im Randbereich der Bodenplatte eine oder mehrere Durchtrittsöffnungen vorgesehen sind, durch welche Rauchgas aus dem Heizraum in den Garraum leitbar ist, wobei im oberen Bereich des Garraumes eine Rauchabzugsöffnung vorgesehen ist, durch die das Rauchgas aus dem Garraum zumindest teilweise austritt.

Unter Garen wird hierin jegliche Form der warmen Speisenzubereitung verstanden, somit auch Backen, Grillen, Räuchern, etc.

Bei Garvorrichtungen, insbesondere zum Backen einer Pizza, ist eine Erhitzung durch ein Holzfeuer erwünscht, da das bei der Verbrennung von Holz entstehende Rauchgas der Pizza eine besondere geschmackliche Note verleiht. Aufgrund der gemauerten Bauweise ist ein herkömmlicher Pizzabackofen nur für stationäre Anwendungen geeignet, es besteht aber der Bedarf an einem transportablen Backofen, der somit ein geringes Gewicht aufweist, dennoch aber ein Backen mit Holzfeuer ermöglicht.

Bei bekannten transportablen Garvorrichtungen dieser Art wird zwar die Wärme durch ein Holzfeuer erzeugt, es wird dabei das Rauchgas aber nur zur Erwärmung der Vorrichtungswände verwendet, wodurch das typische Geschmackserlebnis nicht entstehen oder es nicht zur Ausbildung einer ausreichend hohen Oberhitze kommen kann.

Aufgabe der Erfindung ist es daher, eine Garvorrichtung anzugeben, welche ein geringes Gewicht aufweist und transportabel ist sowie eine direkte Berührung des Holzfeuerabgases mit dem zu garenden Gut ermöglicht. Weiters ist es Aufgabe eine für das Pizzabacken ausreichend hohe Oberhitze zu erzielen. Eine weitere Aufgabe der Erfindung besteht darin, ein einfaches Räuchern des zu garenden Gutes zu erzielen.

Erfindungsgemäß wird dies dadurch erreicht, dass der Garraum im oberen Bereich eine Wärmeisolierungsschicht aufweist, dass der Garraum an einer Seite eine Einschuböffnung zum Einbringen und Entnehmen von Gargut aufweist, dass die Rauchabzugsöffnung nahe der Einschuböffnung angeordnet ist, und dass an der Einschuböffnung im oberen Bereich eine Staublende mit einer Staukante vorgesehen ist, welche Staukante gegenüber der Oberkante der Einschuböffnung bzw. des Garraumes in einem Abstand nach unten versetzt angeordnet ist und die eine Aufstauung des Rauchgases bewirkt, um ein Entweichen desselben über die Einschuböffnung zu behindern.

Durch die Verbrennung im Heizraum entstehende Wärme wird die Bodenplatte mit dem darauf positionierten Gargut erhitzt und bildet damit Unterhitze für den Garvorgang aus. Zugleich wird das bei der Verbrennung im Heizraum entstehende Rauchgas durch den Garraum geleitet und dadurch einerseits der gewünschte Geschmack beim Garen erzielt und andererseits eine ausreichende Oberhitze ermöglicht. Auf diese Weise kann die erfindungsgemäße Vorrichtung aus Teilen mit geringem Gewicht aufgebaut werden, sodass diese transportabel ist und im Freien, z.B. im Garten, leicht aufgestellt und wieder entfernt werden kann.

Die Wärmeisolierung im oberen Bereich des Garraumes verhindert zu hohe Wärmeverluste, welche durch das Vorsehen einer leichten Bauweise, z.B. bei Blechwänden, entstehen könnten. Mittels der Staublende entsteht eine gegenüber der oberen Innenseite des Garraumes nach unten vorstehende Kante, welche verhindert, dass das Rauchgas durch die Einschuböffnung entweicht und bewirkt im Inneren des Garraumes eine Stauung des Rauchgases, wodurch ausreichende hohe Oberhitze entsteht. Dabei ist die Lage der Rauchgasabzugsöffnung im vorderen Bereich, also nahe der Einschuböffnung wichtig, um eine vorteilhafte Wärmeverteilung in Form einer Rauchgaswalze bzw. Temperaturwalze zu erzielen.

Gemäß einem weiteren Ausführungsbeispiel ist die Bodenplatte aus Schamott gebildet, wodurch eine gleichmäßige Abgabe der Wärme in Form von Unterhitze ermöglicht wird. Die Bodenplatte ist somit der einzige Teil der Vorrichtung mit einem höheren Gewicht und kann auch aus einzelnen Steinen zusammengesetzt sein. Die Bodenplatte kann vorzugsweise entfernt werden.

In weiterer Ausbildung der Erfindung können die eine oder mehreren Durchtrittsöffnungen durch zumindest einen Spalt zwischen dem Randbereich der Bodenplatte und zumindest einer Innenseitenwand des Garraumes bzw. des Heizraumes gebildet sein, wodurch das aus dem Brennraum nach oben strömenden Rauchgas zunächst an den Seiten des Garraumes hochsteigt und im oberen Bereich Oberhitze für das auf der Bodenplatt platzierte, zu garende Gut erzeugt.

Gemäß einer alternativen Ausführungsform ist ein Räuchereinsatz vorgesehen, der aus einem vertikalen Rohrabschnitt mit einer am unteren Ende des vertikalen Rohrabschnitts angeordneten Rauchgaserzeugungseinheit und einem mit dem vertikalen Rohrabschnitt verbundenen horizontalen Rohrabschnitt mit Rauchgasaustrittsöffnungen gebildet, der in den Heizraum einbringbar ist.

Der Räuchereinsatz ist so konzipiert, dass er unabhängig von den Merkmalen der erfindungsgemäßen Garvorrichtung in beliebigen anderen Garvorrichtungen, z.B. Grillvorrichtungen einsetzbar ist und hat den Vorteil einer leichten Bauweise und eines geringen Platzbedarfes.

Der aus einem vertikalen und einem horizontalen Rohrabschnitt zusammengesetzte Räuchereinsatz ermöglicht aufgrund der im vertikalen Abschnitt erzielbaren Kaminwirkung eine sehr effiziente Verbrennung und Rauchgasbildung, wobei das entstehende Rauchgas über den horizontalen Abschnitt sehr gleichmäßig innerhalb des Heizraumes austreten kann und somit eine sehr gleichmäßige Rauchverteilung innerhalb des Garraumes erzielt werden kann.

Um die Rauchgaserzeugung in vorteilhafter Weise zu beeinflussen kann vorgesehen sein, dass die Rauchgaserzeugungseinheit eine am unteren Ende des vertikalen Rohrabschnitts ausgebildete Brennmaterialaufnahme aufweist, welche mit verstellbaren Luftzufuhröffnungen versehen ist.

Gemäß einer weiteren Ausführungsform der Erfindung können die verstellbaren Luftzufuhröffnungen durch in der Brennmaterialaufnahme und in dem vertikalen Rohrabschnitt ausgebildete Luftschlitze ausgebildet sein, und die Brennmaterialaufnahme kann gegenüber dem vertikalen Rohrabschnitt zwischen einer fluchtenden und einer nicht fluchtenden Positionierung der Luftschlitze verdrehbar angeordnet sein.

Zur besseren gleichmäßigen Verteilung im Inneren der erfindungsgemäßen Vorrichtung können in weiterer Ausbildung der Erfindung die Rauchgasaustrittsöffnungen an der unteren Seite und entlang der Länge des horizontalen Rohrabschnitts voneinander beabstandet angeordnet sein.

Um die Umrüstung der erfindungsgemäßen Vorrichtung zu einer Räuchervorrichtung möglichst einfach zu gestalten, kann vorgesehen sein, dass der horizontale Rohrabschnitt durch einen Deckel zum Verschließen der Einschuböffnung geführt und mit dem Deckel gasdicht verbunden ist, und dass oberhalb der Durchführungsstelle des horizontalen Rohrabschnitts eine verschwenkbare Klappe zum Einbringen und Entnehmen des Gargutes vorgesehen ist.

Nachfolgend wird die Erfindung anhand der in den Zeichnungen dargestellten Ausführungsbeispiele eingehend erläutert. Es zeigt dabei
Fig.1 eine Vorderseitenansicht einer Ausführungsform der erfindungsgemäßen Garvorrichtung;
Fig.2 eine Seitenansicht der Vorrichtung gemäß Fig.1;
Fig.3 einen vertikalen Längsschnitt AA der Vorrichtung gemäß Fig.1;
Fig.4 einen horizontalen Längsschnitt BB der Vorrichtung gemäß Fig.1;
Fig.5 eine Draufsicht auf die Vorrichtung gemäß Fig.1;
Fig.6 eine Vorderansicht der Vorrichtung gemäß Fig.1 mit Deckel;
Fig.7 eine Seitenansicht der Vorrichtung gemäß Fig.1 mit Deckel;
Fig.8 eine Draufsicht der Vorrichtung gemäß Fig.1 mit Deckel;
Fig.9 eine Vorderseitenansicht einer weiteren Ausführungsform der erfindungsgemäßen Garvorrichtung;
Fig.10 eine Seitenansicht der Vorrichtung gemäß Fig.9;
Fig.11 eine Draufsicht auf die Vorrichtung gemäß Fig.9;
Fig.12 eine Seitenansicht eines Räuchereinsatzes der Vorrichtung gemäß Fig.9 in ausgebautem Zustand;
Fig.13 eine Vorderansicht des Räuchereinsatzes gemäß Fig.9;
Fig.14 ein Schnitt AA des Räuchereinsatzes gemäß Fig.13;
Fig.15 ein Schnitt BB des Räuchereinsatzes gemäß Fig.13 und
Fig.16 eine Draufsicht auf den Räuchereinsatz gemäß Fig.14.

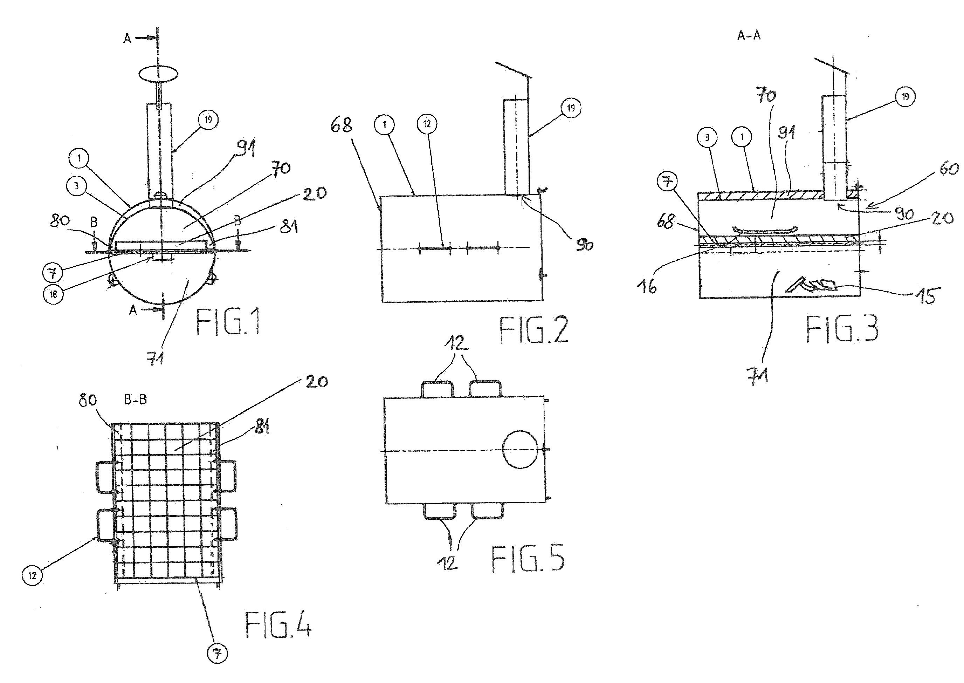

Fig.1 bis 8 zeigen eine Ausführungsform der erfindungsgemäßen Garvorrichtung, die als äußere Hülle einen Hohlzylinder 1 mit waagrecht orientierter Mittelachse aufweist, der z.B. aus Stahlblech ist und z.B. aus einem gebrauchten Industrie-Metallfass (Länge ca. 0,8 m, Durchmesser ca. 0,5 m) hergestellt ist oder aus einem Stahlblech geschweißt sein kann. An der Außenseite des Hohlzylinders 1 sind Tragegriffe 12 angeordnet. Aufgrund dieser Bauweise ergeben sich ein geringes Gewicht und günstige Herstellungskosten, sodass die erfindungsgemäße Vorrichtung kostengünstig und transportabel ist und, z.B. im Freien vorübergehend aufbaubar ist.

Für die Hülle können auch andere rohrartige Querschnitte Verwendung finden, z.B. ein quadratischer, fünfeckiger, sechseckiger, ovaler Querschnitt od. dgl. Der dargestellte kreisförmige Querschnitt ist somit lediglich als beispielhaft anzusehen.

In einer waagrechten Mittelebene des Hohlzylinders 1 ist ein Rost 7 ausgebildet, der eine Bodenplatte 20 aus einem wärmespeichernden Material mit hoher Wärmekapazität, z.B. aus Schamott, trägt, welche Bodenplatte 20 den Hohlzylinder 1 in einen Heizraum 71 und einen oberhalb des Heizraumes 71 angeordneten Garraum 70 unterteilt. Die Bodenplatte 20 trennt somit den Garraum 70 im Wesentlichen vom Heizraum 71.

In den halbzylindrischen Heizraum 71 unterhalb der Bodenplatte 20 kann somit Brennmaterial 15 (Fig.3), bevorzugt Holz gefüllt werden, welches nach dem Anzünden die oberhalb des Heizraumes befindliche Bodenplatte 20 erhitzt, welche die Wärme nach oben in den Garraum 70 abstrahlt und durch ihre Wärmespeicherfähigkeit eine für das Garen, z.B. Backen, gleichmäßige Unterhitze erzeugt. Das in der erfindungsgemäßen Garvorrichtung zu garende Gargut, z.B. eine Pizza 16 (Fig.3), wird auf die Oberseite der Bodenplatte 20 gelegt, gegebenenfalls kann auch z.B. ein Backblech od. dgl. mit dem darin befindlichen Gargut auf der Bodenplatte 20 platziert werden.

Weiters entsteht bei der Holzverbrennung ein heißes Rauchgas, das zur Erzeugung von Oberhitze innerhalb des Garraumes 70 verwendet wird. Bevorzugt ist die erfindungsgemäße Vorrichtung als Pizzabackofen verwendbar.

Im Randbereich der Bodenplatte sind Durchtrittsöffnungen 80, 81 vorgesehen, durch welche Rauchgas aus dem Heizraum 71 in den Garraum 70 geleitet wird. Im oberen Bereich des Garraumes 70 ist eine Rauchabzugsöffnung 90 vorgesehen, durch die das Rauchgas aus dem Garraum 70 teilweise austritt. Die Rauchabzugsöffnung 90 ist mit einem Kaminaufsatz 19 verbunden, welcher z.B. durch ein Ofenrohr (Durchmesser z.B. 0,12 m) gebildet sein kann, über welches eine Kaminwirkung auf das Rauchgas ausgeübt wird.

Die Durchtrittsöffnungen 80, 81 sind im vorliegenden Ausführungsbeispiel durch jeweils einen Spalt zwischen dem längsseitigen Randbereich der Bodenplatte 20 und des zugehörigen Innenseitenwandbereiches des Garraumes 70 bzw. des Heizraumes 71 gebildet, sodass das Rauchgas durch die seitlichen Spalte in den Garraum 70 eintreten kann (Fig.1, Fig.4).

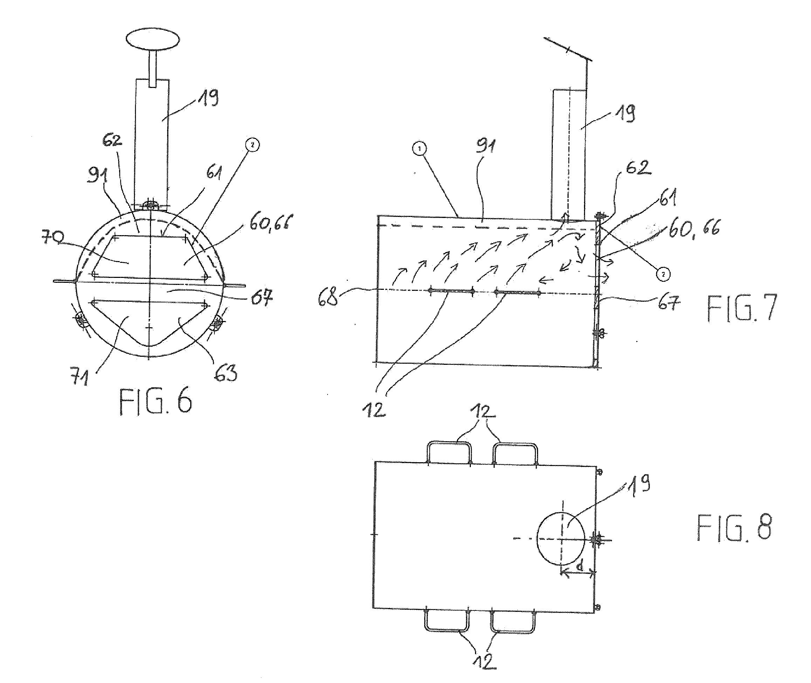

Um eine ausreichende und gleichmäßige Oberhitze innerhalb des Garraumes 70 zu ermöglichen, weist der Garraum 70 erfindungsgemäß eine Wärmeisolierungsschicht 91 auf, welche z.B. aus Steinwolle und einer Deckschicht 3 aus Blech besteht, die im oberen Querschnittsbereich an der Innenseite des Hohlzylinders 1 angebracht ist. Bevorzugt erstreckt sich die Wärmeisolierungsschicht 91 über den gesamten halbkreisbogenförmigen Wandbereich des Garraumes 70, wobei die Schichtdicke der Wärmeisolierungsschicht 91 - im Querschnitt gesehen- von ihrem Maximalwert an der höchsten Stelle des Garraumquerschnitts 70 in der Mitte zu den in der Ebene des Rostes 7 befindlichen, einander gegenüberliegenden Endpunkten hin kontinuierlich abnimmt (Fig.1,Fig.6). Durch Verwendung von Steinwolle ergibt sich eine sehr leichte Wärmeisolierung.

Der Garraum 70 weist an einer Stirnseite eine Einschuböffnung 60 zum Einbringen und Entnehmen von Gargut oberhalb der Bodenplatte 20 und zum Nachlegen von Brennmaterial unterhalb der Bodenplatte 20 auf. Dabei ist weiters erfindungsgemäß die Rauchabzugsöffnung 90 nahe der Einschuböffnung 60 angeordnet, sodass das Rauchgas im Wesentlichen erst nach Durchströmen des Hohlzylinders 1 austreten kann (Fig.7, 8). Im vorliegenden Beispiel ist die Rauchgasabzugsöffnung 90 mittig in einem geringen Abstand d von der Ebene der Einschuböffnung 60 angeordnet.

Der Hohlzylinder 1 ist an der Einschuböffnung 60 mit einem abnehmbaren Deckel 67 versehen (Fig.6, 7), in dessen oberem Bereich eine trapezförmige Ausnehmung 66, durch die das Gargut in die Garvorrichtung eingebracht und aus dieser entnommen werden kann, ausgebildet ist, wohingegen im unteren Bereich eine dreieckförmige Öffnung 63 ausgenommen ist, durch welche Brennmaterial zugeführt werden kann. Die entgegengesetzte Stirnseite des Hohlzylinders 1 ist durch einen weiteren Deckel 68 verschlossen. Die geometrische Form der Ausnehmungen 66, 63 unterliegt keinerlei Einschränkung und kann in beliebiger Weise gestaltet sein.

Im oberen Bereich der Einschuböffnung 60 ist weiters erfindungsgemäß eine Staublende 62 mit einer Staukante 61 vorgesehen, die gegenüber der Oberkante der Einschuböffnung 60 bzw. des Garraumes 70 in einem Abstand nach unten versetzt angeordnet ist und die eine Aufstauung des Rauchgases bewirkt, um ein Entweichen desselben über die Einschuböffnung 60 zu behindern, wodurch die Ausbildung höherer Temperaturen im oberen Bereich des Garraumes 70 ermöglicht wird, die z.B. beim Pizzabacken erforderlich sind. In Fig.7 ist dazu das aus den Spalten 80, 81 aufsteigende Rauchgas durch Pfeile eingezeichnet, das teilweise durch die Rauchabzugsöffnung 90 und die trapezförmige Ausnehmung 66 abzieht, jedoch an der Staublende 62 so gestaut wird, dass eine ausreichende Oberhitze für das Gargut erzielt werden kann.

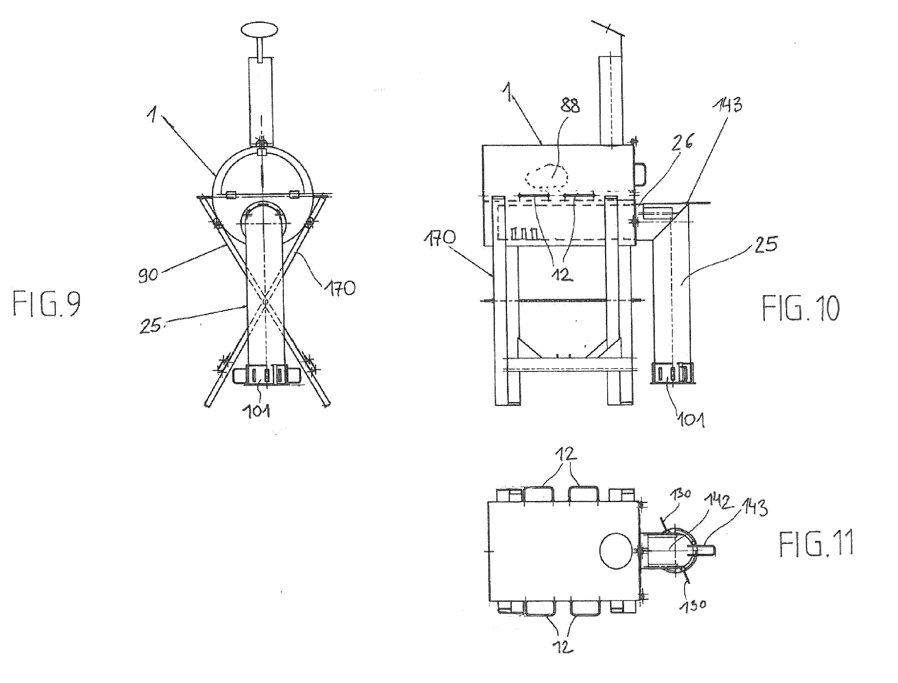

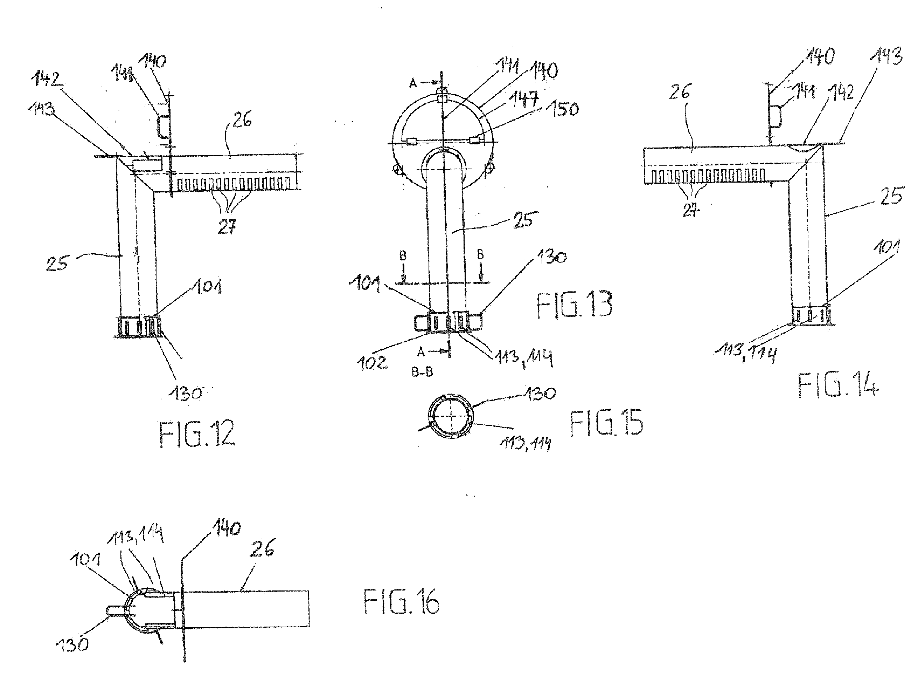

Fig.9 bis 16 zeigen eine weitere Ausführungsform der erfindungsgemäßen Garvorrichtung, die auf einem Gestell 170 gelagert ist, und mit einem Räuchereinsatz verbunden ist, der in die erfindungsgemäße Garvorrichtung eingebaut ist. Der Räuchereinsatz ist aus einem vertikalen Rohrabschnitt 25 mit einer am unteren Ende des vertikalen Rohrabschnitts 25 angeordneten Rauchgaserzeugungseinheit 101 und einem mit dem vertikalen Rohrabschnitt verbundenen horizontalen Rohrabschnitt 26 mit Rauchgasaustrittsöffnungen 27 gebildet, der in den Heizraum 71 einbringbar ist. In Fig.1 ist dazu an der Unterseite des Rostes 7 eine Abstützung 18 für den horizontalen Rohrabschnitt 26 gezeigt, damit dieser im eingebrachten Zustand den Rost 7 nicht berührt. Um den Rauch besser in den Garraum 70 einzuleiten, kann die Bodenplatte 20 entfernt werden. Der mit dem horizontalen Rohrabschnitt 26 verbundene vertikale Rohrabschnitt 25 kann z.B. durch ein Rohrknie, z.B mit Durchmesser 0,2 m und einer Schenkellänge von z.B. 0,9m verwirklicht werden.

Der in dieser Weise ausgeführte Räuchereinsatz kann unabhängig von der erfindungsgemäßen Garvorrichtung auch in anderen Garvorrichtungen zum Einsatz gelangen, durch welche Rauchgas hindurchgeleitet werden kann.

Die Rauchgaserzeugungseinheit 101 weist eine am unteren Ende des vertikalen Rohrabschnitts 25 ausgebildete Brennmaterialaufnahme 102 auf, welche mit verstellbaren Luftzufuhröffnungen versehen ist, die durch in der Brennmaterialaufnahme 102 und in dem vertikalen Rohrabschnitt 25 ausgebildete Luftschlitze 113, 114 ausgebildet sind.

Die Brennmaterialaufnahme 102 ist gegenüber dem vertikalen Rohrabschnitt 25 zwischen einer fluchtenden und einer nicht fluchtenden Positionierung der Luftschlitze 113, 114 mittels Handgriffen 130 verdrehbar angeordnet, sodass die Luftzufuhr entsprechend geregelt werden kann. Die Rauchgasaustrittsöffnungen 27 sind an der unteren Seite und entlang der Länge des horizontalen Rohrabschnitts 26 voneinander beabstandet angeordnet.

Die aufgrund des vertikalen Rohrabschnitts 25 entstehende Kaminwirkung erzeugt einen ausreichenden Unterdruck, um das in die Brennmaterialaufnahme 102 eingebrachte Brennmaterial über die durch die Luftschlitze 113, 114 angesaugte Luft zur Verbrennung zu bringen und heißes Rauchgas zu erzeugen, welches über die im horizontalen Rohrabschnitt 26 ausgebildeten Rauchgasaustrittsöffnungen 27 in den Heizraum 71 eingeleitet wird. Von dort aus gelangt das Rauchgas in den Garraum, wo Gargut 88 (Fig.10) mit dem strömenden heißen Rauchgas beaufschlagt wird, sodass eine Räucherung bzw. ein Smoken des Gargutes stattfindet. Das Rauchgas wird durch die Rauchgasabzugsöffnung 90 und den Kaminaufsatz 19 in die Umgebung abgegeben.

Zum einfachen Einbau in die erfindungsgemäße Garvorrichtung ist der horizontale Rohrabschnitt 26 durch einen Deckel 140 zum Verschließen der Einschuböffnung 60 geführt und mit dem Deckel 140 gasdicht verbunden. Der Deckel 140 ist an dem Hohlzylinder 1 über Schraubverbindungen befestigbar. Oberhalb der Durchführungsstelle des horizontalen Rohrabschnitts 26 ist eine verschwenkbare Klappe 147, die über Gelenke 150 am Deckel 140 verschwenkbar angebracht ist und die über einen Handgriff 141 geöffnet und geschlossen werden kann, zum Einbringen und Entnehmen des Gargutes vorgesehen.

Am oberen Ende des vertikalen Rohrabschnitts 25 ist eine Brennmaterialzufuhröffnung 142 ausgenommen, durch die Brennmaterial, vorzugsweise Brennholz, in die Brennmaterialaufnahme 102 von oben eingebracht werden kann. Über einen Schieber 143 kann die Brennmaterialzufuhröffnung 142 geöffnet und geschlossen werden.

## Patentansprüche

1. Garvorrichtung mit einem Heizraum (71)und einem oberhalb des Heizraumes (71) angeordneten Garraum (70), wobei der Garraum (70) eine Bodenplatte (20)aufweist, durch welche der Garraum (70) vom Heizraum (71) getrennt ist, wobei im Randbereich der Bodenplatte (20) eine oder mehrere Durchtrittsöffnungen (80, 81) vorgesehen sind, durch welche Rauchgas aus dem Heizraum (71) in den Garraum (70) leitbar ist, und wobei im oberen Bereich des Garraumes (70) eine Rauchabzugsöffnung (90) vorgesehen ist, durch die das Rauchgas aus dem Garraum (70) zumindest teilweise austritt, **dadurch gekennzeichnet, dass** der Garraum (70) im oberen Bereich eine Wärmeisolierungsschicht (91) aufweist, dass der Garraum (70) an einer Seite eine Einschuböffnung (60) zum Einbringen und Entnehmen von Gargut aufweist, dass die Rauchabzugsöffnung (90) nahe der Einschuböffnung (60) angeordnet ist, und dass an der Einschuböffnung (60) im oberen Bereich eine Staublende (62) mit einer Staukante (61) vorgesehen ist, welche Staukante (61) gegenüber der Oberkante der Einschuböffnung (60) bzw. des Garraumes (70) in einem Abstand nach unten versetzt angeordnet ist und die eine Aufstauung des Rauchgases bewirkt, um ein Entweichen desselben über die Einschuböffnung (60) zu behindern.

2. Garvorrichtung nach Anspruch 1, **dadurch gekennzeichnet, dass** die Bodenplatte (20) aus Schamott gebildet ist.

3. Garvorrichtung nach Anspruch 1 oder 2, **dadurch gekennzeichnet, dass** die eine oder mehreren Durchtrittsöffnungen (80, 81) durch zumindest einen Spalt zwischen dem Randbereich der Bodenplatte (20) und zumindest einer Innenseitenwand des Garraumes bzw. des Heizraumes gebildet ist bzw. sind.

4. Garvorrichtung nach Anspruch 1, **dadurch gekennzeichnet, dass** ein Räuchereinsatz vorgesehen ist, der aus einem vertikalen Rohrabschnitt (25) mit einer am unteren Ende des vertikalen Rohrabschnitts (25) angeordneten Rauchgaserzeugungseinheit (28) und einem mit dem vertikalen Rohrabschnitt verbundenen horizontalen Rohrabschnitt (26) mit Rauchgasaustrittsöffnungen (27) gebildet ist, der in den Heizraum einbringbar ist.

5. Garvorrichtung nach Anspruch 4, **dadurch gekennzeichnet**, das die Rauchgaserzeugungseinheit (101) eine am unteren Ende des vertikalen Rohrabschnitts (25)ausgebildete Brennmaterialaufnahme aufweist, welche mit verstellbaren Luftzufuhröffnungen versehen ist.

6. Garvorrichtung nach Anspruch 5, **dadurch gekennzeichnet, dass** die verstellbaren Luftzufuhröffnungen durch in der Brennmaterialaufnahme und in dem vertikalen Rohrabschnitt ausgebildete Luftschlitze (113, 114) ausgebildet sind, und dass die Brennmaterialaufnahme gegenüber dem vertikalen Rohrabschnitt zwischen einer fluchtenden und einer nicht fluchtenden Positionierung der Luftschlitze (113, 114) verdrehbar angeordnet ist.

7. Garvorrichtung nach einem der Ansprüche 4, 5 oder 6,
**dadurch gekennzeichnet**, die Rauchgasaustrittsöffnungen (27) an der unteren Seite und entlang der Länge des horizontalen Rohrabschnitts (25) voneinander beabstandet angeordnet sind.

8. Garvorrichtung nach einem der Ansprüche 4 bis 7, **dadurch gekennzeichnet, dass** der horizontale Rohrabschnitt (25) durch einen Deckel (140) zum Verschließen der Einschuböffnung (60) geführt und mit dem Deckel (140) gasdicht verbunden ist, und dass oberhalb der Durchführungsstelle des horizontalen Rohrabschnitts eine verschwenkbare Klappe (147) zum Einbringen und Entnehmen des Gargutes vorgesehen ist.
